# EUROPEAN PATENT SPECIFICATION

(11) **EP 3 859 927 B1**
(45) Date of publication and mention of the grant of the patent: **02.12.2026**
(21) Application number: 20823251.2
(22) Date of filing: 03.06.2020
(51) Int. Cl.: H02H 9/04, B64D 45/02, F03D 80/30, H02G 13/00

(54) **ELECTROMAGNETIC VARIABLE-RADIOFREQUENCY COMPENSATOR DEVICE FOR THE PROTECTION OF THE BLADES OF WIND TURBINE TOWERS OR OTHER MOVABLE OR STATIC STRUCTURES**
ELEKTROMAGNETISCHE KOMPENSATORVORRICHTUNG MIT VARIABLER FUNKFREQUENZ ZUM SCHUTZ DER SCHAUFELN VON WINDTURBINENTÜRMEN ODER ANDEREN BEWEGLICHEN ODER STATISCHEN STRUKTUREN
DISPOSITIF COMPENSATEUR ÉLECTROMAGNÉTIQUE DE RADIOFRÉQUENCES VARIABLES POUR PROTECTION DE PALES DE MÂTS ÉOLIENS OU AUTRES STRUCTURES MOBILES OU STATIQUES

(30) Priority: 14.06.2019 ES 201930547
(43) Date of publication of application: 04.08.2021
(73) Proprietor: Dinnteco Factory Gasteiz, S.L., 01010 Vitoria (ES)
(72) Inventor: MALDONADO PARDO, Antonio Javier, 01010 VITORIA GASTEIZ (ES)
(74) Representative: Espiell Gomez, Ignacio
(86) International application number: PCT/ES2020/070372
(87) International publication number: WO 2020/249840

(56) References cited:
- EP-A1- 3 404 792
- CA-A1- 2 972 685
- CN-A- 102 412 506
- CN-A- 103 296 669
- CN-U- 202 210 678
- CN-Y- 201 378 679
- US-A- 5 532 897
- US-A1- 2017 350 374

## Description

### OBJECT OF THE INVENTION

The invention, as stated in the title of this specification, refers to a variable radiofrequencies electromagnetic compensating device for protecting the wind towers blades that provides the function to which it is designed with advantages y characteristics, that are disclosed in detail thereafter.

The object of this invention refers to a device which aim is to provide a means for protecting the wind towers blades against the direct atmospheric discharges, as well as against electromagnetic pulses that could affect them coming from atmospheric discharges between clouds, either positive or negative, in its close environment and against those coming from towers or radiant antennas emissions, from telecommunications, radars of any type or from another origin.

### FIELD OF APPLICATION OF THE INVENTION

The field of application of this invention is within the sector of the industry engaged in manufacturing apparatuses, systems and devices for protecting metal structures against the collection of electric charges.

### BACKGROUND OF THE INVENTION

As reference to the current state-of-the-art, in must be quoted that, at least the applicant is not aware of the existence of any other electromagnetic compensating device, or of any other invention to be applied for protecting wind towers blades, having metal elements for collecting electric charges or for any other similar application, possessing technical and structural characteristics same or like those that the one herein claimed possesses. An example of prior art solution is available in document CN 102 412 506 A.

### EXPLANATION OF THE INVENTION

The invention refers to an electro-magnetic compensator device according to claim 1. The variable radiofrequencies electromagnetic compensating device for protecting wind towers blades that the invention proposes, as it was said before, has as object protecting the wind towers blades , against the direct atmospheric discharges, as well as against the electromagnetic pulses that can affect it, coming from atmospheric discharges between clouds, either positive or negative, in its close environment and against those coming from towers or radiant antennas emissions, from telecommunications, radars of any type or of another origin.

The device object of the patent can be placed inside or outside the structure to be protected, depending on each case, although preferably it is arranged inside and, anyway, interconnected between the external collecting elements of the structure to be protected and the connection to the earth. For the case of protecting a wind tower blade, the device is placed inside the blade and is interconnected between the mobile or static collecting elements (depending on whether the blade is moving or not) of the blade and its connection to the earth.

The protecting device is activated in the moment that a sufficient accumulation of electrostatic charge appears, either of atmospheric origin due to the appearance of an electric field in its immediate environment or by electrification due to the constant movement of the electric charges collecting elements, such as for example , the constant movement of the wind tower blades or the movement of a crane or of a mobile telescope, and variable radiofrequency electromagnetic pulses, of atmospheric origin or coming from external sources such as radiant towers or from telecommunications, radars, etc., carrying out first a high reactance effect (force against electromotive) to the passage of high frequency current converting it into heat and leaving passage to the low current, in order to eventually carry out a compensation of the charges existing between the connection to the external mobile or static collecting elements (for example, the blades) and the earth connection. The compensating effect is activated at a given value of difference of potential existing inside the device and compensates all the charges over this potential value, preventing that ascendant markers are formed in the mobile or static external collecting elements.

The variable radiofrequencies electromagnetic compensating device, object of this invention, is the result of the knowledge of the frequencies spectrums existing in the atmospheric phenomena and in the electromagnetic pulses generated in them and those derived from external sources, such as the radiant towers, telecommunications, radars and AM, FM signals as well as investigations related to the analysis of resonant modes of variable radiofrequency in different structures.

The design of the device object of the invention was also based in studies on the results of the radiofrequency electromagnetic field obtained by simulation for distributions of the electric field E, magnetic field H and density of superficial current J in different moments of time comparable to each other in frequency spectrums ranging from 0.4 GHz to 1,9 GHz, where potential designs of resonant structures of electromagnetic fields are concluded that have a main resonant mode in a given frequency in GHz and an almost continue of oblique modes in the rest of the spectrum of frequency, achieving results of designs of the device object of the invention, that is acting like a resonator of electromagnetic radiofrequencies that facilitates the electric discharges, mainly in the said spectrum of frequencies (0.4 to 1.9 GHz). These electric discharges take place due to the absorption of the variable radiofrequencies electromagnetic fields and the recombination of the electric charges having a different sign (mostly positive electrons and ions). This occurs due to the participative action of the static electrical and magnetic fields, as well as of the resonant electromagnetic field in different frequencies. Both actions facilitate the combination of charges as they remain involved (temporarily trapped) in close confinement zones by the effect of the radiofrequency electromagnetic field, where due to the action of mobility promoted by the static fields the compensation of the electric charge is stimulated.

Therefore, the device of the invention has as operating principle, on one hand, acting with high reactance to the passage of high frequency currents transforming it in heat, leaving that only the low frequency currents pass and on the other hand, the compensation of the variable radiofrequency electromagnetic fields, acting as a constant sink, from a given difference of potential (ranging from 10 to 20 KV), of the variable radiofrequency electric charges.

These processes take place in the confinement of the device, that is a airtight and antifire box, but its permanent and almost continuous activity is felt in a far-reaching environment, concretely in all the conductive structures connected in both terminals of the device, either direct or by electric continuity, because the compensating processes of homogenization, conductivity between materials and thermalization stimulate the diffusion between conductive means in unbalance local environments.

Based on the said studies, and bearing in mind that the device possesses a limit in its capacity of electromagnetic compensation, that basically depends on the speed of transmission of the charges accumulated in the mobile or statistic collectors of the structure to be protected (for example the wind tower blade) towards the device, as well as on the value of the earth resistor to which the device is connected (it shall have to be always lower than 10 Ohms in order there is as good transmission of electric charges towards the device) and of the frequencies spectrum of the current transmitted, by installing the device, a variable absorption of low intensity current toward the earth is achieved, avoiding that the mobile or statistic external collecting systems of the structure to be protected in which it is incorporated, generate ascendant markers (derived from its own movement or of possible variations of electrical fields of atmospheric origin), couplings of variable frequency electromagnetic pulses radiated from outside and possible saturations of electrostatic charges in the said collecting devices.

For this and, concretely, the device essentially comprises two connection conductive adapters, charged of the connections of the device with the external collectors of the element to be protected, on the one hand, and with the earth connection, on the other hand; two elements of high reactance to the passage of the high frequency current and energy absorbers in the form of heat, one charged to generate a force against electromotive to the passage of the initial high frequency current, lowering the frequency and absorbing a part of the energy generated in heat, arriving eventually to the other element, after the current passed by a central system formed by a dielectric insulator located between both conductive elements and that basically forms the frequency resonator, this other high reactance element absorbing the residual energy and that only let pass the low frequency current.

In addition, in the preferred embodiment, it also comprises two supports of insulating material, to fix the said elements inside a box, and that, in turn, avoid that the central system of the dielectric insulator touches the walls of the said box, a very important concept, as electrical arcs can be formed between the conductive elements of the said system in its process of normal compensation and operation.

On its part, the said central system composed by the dielectric insulator and the said two conductive elements arranged on both sides thereof, form the proper resonator and electromagnetic compensator.

As for as the box, preferably, it is a box of waterproof and airtight insulating material, with mechanical and antifire protection, essential in order that the electric charges only come in through the connection conductive adapters, that are externally located on both opposite sides of
the box, and there exist no intake of electrified air or water, that could vary the operating conditions of the resonator or provoke a loss of insulation thereof and stands the heat conditions that are internally generated, that will have to stand minimum up to 200 ºC.

The device comprises, in addition, incorporated to the box, a series of pressure aeration valves from inside to outside and airtight to the entrance of humidity and air, charged to remove the internal overpressure of the box, so that there is always the same pressure inside and outside the box, as well as to remove the humidity from inside the box that can be present and avoid that the humidity comes in the box .

Preferably, the box comprises four pressure aeration valves, although such number can vary and will depend on the speed and quantity of air it is sought to be removed, in order that there does not exist, within the box, an overpressure in excess that could break it. The normal would be that there is a minimum of two valves and a maximum of four valves.

Last, it shall be mentioned that the disclosed elements of the device could have several geometrical shapes, that will depend on the protecting requirements and design for the structures to which they are designed.

Anyway the single premise is that, in order that the variable radiofrequencies electromagnetic compensating device operates correctly it has to be borne in mind that the conductive elements that are located on both sides of the dielectric insulator must have a concrete separation, depending on the conductivity of the material used and the degree of insulation of the said dielectric element.

### DESCRIPTION OF THE DRAWINGS

To complement the description that is being carried out and in order to assist to a best understanding of the characteristics of the invention, attached to this specification, as an integral part thereof, is a drawing in which for illustration and no limitation purpose, the following has been represented:
The figure number 1 and unique. - It shows a schematic view in lateral perspective of an example of embodiment of the variable compensating device object of the invention, in which appear the main parts and elements it comprises, as well as its configuration and arrangement.

### PREFERRED EMBODIMENT OF THE INVENTION

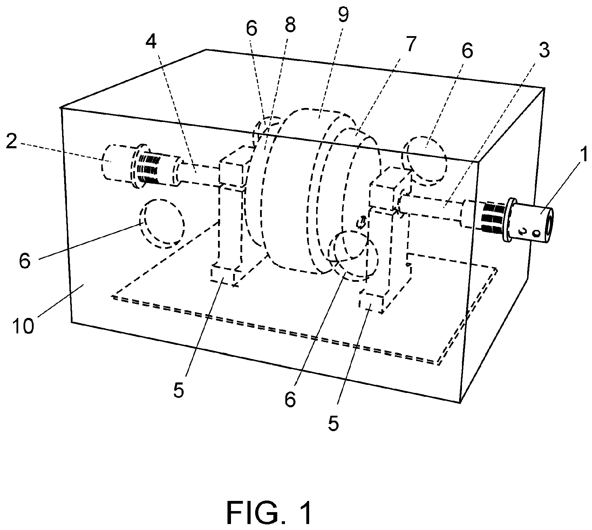

At the sight of the disclosed figure 1, and according to the numerals adopted in it, a not limiting example of embodiment of the variable radiofrequencies electromagnetic compensating device of the invention can be seen, which comprises what is described in detail below.

Thus, as it can be seen in the said figure, the device of the invention, applicable as system protecting against direct atmospheric discharges in the wind towers blades and in mobile and static elements for collecting electric charges in general and protecting electromagnetic pulses that could affect them coming from atmospheric discharges between clouds, either positive or negative, in its close environment and against those coming from the emissions from towers or radiant antennas, from telecommunications, radars of any type or from another origin, comprises, at least, the following essential elements:
- two conductive adapters of connection (1, 2), a first adapter (1) charged of the connections of the device with the external collectors of the element to be protected on the one hand and a second adapter (2) charged of the connections with the earth, on the other hand;
- two elements of high reactance to the passage of high frequency current and absorbers of energy in form of heat (3, 4) that, connected on both sides of a frequency resonator (7, 8, 9) and respectively to the two adapters (1, 2), are charged, in a first element (3) connected to the first adapter (1), to generate a force against electromotive to the passage of high frequency initial current, lowering the frequency and absorbing a part of the energy generated in heat, and a second element (4) connected to the second adapter (2) and, after the current has passed by the frequency resonator (7, 8, 9), of absorbing the residual energy leaving that only the low frequency current passes ; and
- a frequency resonator that constitutes the proper electromagnetic compensating device, being composed of a dielectric insulator (9) located between a first and a second conductive elements (7, 8) that in turn, respectively connect with the said first and second high reactance elements to the passage high frequency current and of absorbing devices of energy in form of heat (3, 4).

In addition, preferably, the said elements (1, 2, 3, 4, 7, 8 y 9) are incorporated to an airtight box (10), so that all of them remain housed and insulated within it except the adapters (1, 2) that remain externally located on both sides thereof.

Inside the box (10) has been provided the existence of both supports (5) of insulating material, to fix the internal elements thereof and prevent that the frequency resonator (7, 8, 9) touches the walls of the said box (10) and electric arcs can be formed during its operation.

Preferably, the box (10) is of insulating waterproof and airtight material, with mechanical and antifire protection, capable to stand temperatures of up to 200 ºC.

In addition, preferably the box (10) incorporates pressure aeration valves (6) from inside to outside and airtight to the entrance of humidity and air, charged to remove the internal overpressure of the box, so that there is always the same pressure inside and outside the box, as well as to remove the humidity from inside the box that can be present and avoid that the humidity comes in the box .

Preferably, the box possesses four pressure aeration valves (6) and, minimum it has two valves (6).

The nature of this invention being sufficiently disclosed, as well as the manner of implementing it, it is not considered necessary to extend any longer its explanation for any skilled man in the art understanding its extent and the advantages arising from it.

## Claims

1. Electromagnetic variable-radiofrequency compensator device for the protection of the blades of wind turbine towers against electromagnetic pulses, **characterized by** comprising:
- two conductive adapters of connection (1, 2), a first adapter (1) charged of the connections of the device with the external collectors of the element to be protected, on the one hand, and a second adapter (2) charged of the connections with the earth, on the other hand;
- two elements of high reactance to the passage of high frequency current and absorbers of energy in form of heat (3, 4) that, connected on both sides of a frequency resonator (7, 8, 9) and respectively to the two adapters (1, 2), are charged , a first element (3) connected to the first adapter (1), to generate a force against electromotive to the passage of high frequency initial current, lowering the frequency and absorbing a part of the energy generated in heat , and a second element (4) connected to the second adapter (2) and, after the current has passed by the frequency resonator (7, 8, 9), to absorb the residual energy leaving that only the low frequency current passes ; and
- a frequency resonator that constitutes the proper electromagnetic compensating device, being composed by a dielectric insulator (9) located between a first and a second conductive elements (7, 8) that, in turn, connect, respectively, with the said first and second high reactance elements to the passage of high frequency current and energy absorbers in form of heat (3, 4).

2. Electromagnetic variable-radiofrequency compensator device according to claim 1, wherein the said elements (1, 2, 3, 4, 7, 8, 9) are incorporated in an airtight box (10), so that all of them remain housed and insulated within it except the adapters (1, 2) that remain externally located on both sides thereof.

3. Electromagnetic variable-radiofrequency compensator device according to claim 2, wherein, inside the box (10), there exist both supports (5) of insulating material, to fix the internal elements thereof and prevent that the frequency resonator (7, 8, 9) touches the walls of the said box (10) preventing that electric arcs can be formed during its operation.

4. Electromagnetic variable-radiofrequency compensator device according to any one of claims 2 or 3, wherein the box (10) is of waterproof and airtight insulating material, with mechanical and antifire protection, capable to stand up to 200 ºC.

5. Electromagnetic variable-radiofrequency compensator device according to any one of claims 2 to 4, wherein the box (10) incorporates pressure aeration valves from inside to outside and airtight to the entrance of humidity and air, charged to remove the internal overpressure of the box , so that there is always the same pressure inside and outside the box, as well as to remove the humidity from inside the box that can be present and avoid that the humidity comes in the box .

6. Electromagnetic variable-radiofrequency compensator device according to claim 5, wherein the box (10) possesses, at least, two aeration pressure valves (6).

7. Electromagnetic variable-radiofrequency compensator device according to claim 6, wherein the box (10) possesses four valves (6).

## Patentansprüche

1. Elektromagnetische Kompensatorvorrichtung mit variabler Funkfrequenz zum Schutz der Schaufeln von Windturbinentürmen gegen elektromagnetische Impulse, **dadurch gekennzeichnet, dass** sie Folgendes umfasst:
- zwei leitfähige Anschlussadapter (1, 2), wobei einerseits ein erster Adapter (1) für die Anschlüsse der Vorrichtung an die externen Kollektoren des zu schützenden Elements verwendet wird, und ein zweiter Adapter (2) andererseits für die Erdungsanschlüsse verwendet wird;
- zwei Elemente mit hoher Reaktanz gegenüber dem Durchgang von Hochfrequenzstrom und Absorber von Energie in Form von Wärme (3, 4),
- die beidseitig an einen Frequenzresonator (7, 8, 9) und jeweils an die beiden Adapter (1, 2) angeschlossen sind und geladen werden, ein erstes Element (3), das an den ersten Adapter (1) angeschlossen ist, und eine Kraft gegen die elektromotorische Kraft beim Durchgang des anfänglichen Hochfrequenzstroms erzeugt, die Frequenz senkt und einen Teil der in Form von Wärme erzeugten Energie absorbiert, und ein zweites Element (4), das an den zweiten Adapter (2) angeschlossen ist und nach dem Durchgang des Stroms durch den Frequenzresonator (7, 8, 9) die Restenergie absorbiert, so dass nur der Niederfrequenzstrom durchgelassen wird; und
- einen Frequenzresonator, der die eigentliche elektromagnetische Kompensatorvorrichtung darstellt und aus einem dielektrischen Isolator (9) besteht, der sich zwischen einem ersten und einem zweiten leitfähigen Element (7, 8) befindet, die ihrerseits jeweils an das erste und das zweite Element mit hoher Reaktanz gegenüber dem Durchgang von Hochfrequenzstrom und an die Absorber für Energie in Form von Wärme (3, 4) angeschlossen sind.

2. Elektromagnetische Kompensatorvorrichtung mit variabler Funkfrequenz nach Anspruch 1, wobei die genannten Elemente (1, 2, 3, 4, 7, 8, 9) in einem luftdichten Gehäuse (10) untergebracht sind, so dass sie alle darin aufgenommen sind und isoliert bleiben, mit Ausnahme der Adapter (1, 2), die sich außen an beiden Seiten des Gehäuses befinden.

3. Elektromagnetische Kompensatorvorrichtung mit variabler Funkfrequenz nach Anspruch 2, wobei sich im Inneren des Gehäuses (10) zwei Stützen (5) aus Isoliermaterial befinden, um die inneren Elemente des Gehäuses zu fixieren und zu verhindern, dass der Frequenzresonator (7, 8, 9) die Wände des Gehäuses (10) berührt, wodurch verhindert wird, dass sich während des Betriebs Lichtbögen bilden können.

4. Elektromagnetische Kompensatorvorrichtung mit variabler Funkfrequenz nach einem der Ansprüche 2 oder 3, wobei das Gehäuse (10) aus wasserdichtem und luftdichtem Isoliermaterial besteht, mit einem mechanischen Schutz und Brandschutz, das Temperaturen von bis zu 200 °C standhalten kann.

5. Elektromagnetische Kompensatorvorrichtung mit variabler Funkfrequenz nach einem der Ansprüche 2 bis 4, wobei das Gehäuse (10) von innen nach außen mit Entlüftungsventilen ausgestattet ist, die den Eintritt von Feuchtigkeit und Luft verhindern, die dazu dienen, den inneren Überdruck im Gehäuse abzubauen, so dass innerhalb und außerhalb des Gehäuses immer der gleiche Druck herrscht, sowie um die möglicherweise im Inneren des Gehäuses vorhandene Feuchtigkeit zu entfernen und deren Eindringen in das Gehäuse zu verhindern.

6. Elektromagnetische Kompensatorvorrichtung mit variabler Funkfrequenz nach Anspruch 5, wobei das Gehäuse (10) mindestens zwei Entlüftungsventile (6) aufweist.

7. Elektromagnetische Kompensatorvorrichtung mit variabler Funkfrequenz nach Anspruch 6, wobei das Gehäuse (10) vier Ventile (6) aufweist.

## Revendications

1. Dispositif compensateur électromagnétique de radiofréquences variables pour la protection des pales de mâts éoliens contre les impulsions électromagnétiques, **caractérisé en ce qu'**il comprend:
- deux adaptateurs conducteurs de liaison (1, 2), un premier adaptateur (1) chargé des liaisons du dispositif avec les collecteurs externes de l'élément à protéger, d'une part, et un second adaptateur (2) chargé des liaisons avec la terre, d'autre part;
- deux éléments à forte réactance au passage du courant à haute fréquence et absorbant l'énergie sous forme de chaleur (3, 4) qui, reliés de part et d'autre d'un résonateur de fréquence (7, 8, 9) et respectivement aux deux adaptateurs (1, 2), sont chargés, un premier élément (3) relié au premier adaptateur (1), de générer une force contre-électromotrice au passage du courant initial à haute fréquence, en abaissant la fréquence et
- en absorbant une partie de l'énergie générée sous forme de chaleur, et un second élément (4) relié au second adaptateur (2) et, après que le courant est passé par le résonateur de fréquence (7, 8, 9), d'absorber l'énergie résiduelle de sorte à ne laisser passer que le courant à basse fréquence; et
- un résonateur de fréquence qui constitue le dispositif de compensation électromagnétique proprement dit, étant composé d'un isolant diélectrique (9) situé entre un premier et un second élément conducteur (7, 8) qui, à leur tour, sont reliés respectivement auxdits premier et second éléments à forte réactance au passage du courant à haute fréquence et absorbant l'énergie sous forme de chaleur (3, 4).

2. Dispositif compensateur électromagnétique de radiofréquences variables selon la revendication 1, dans lequel lesdits éléments (1, 2, 3, 4, 7, 8, 9) sont incorporés dans un boîtier hermétique (10), de sorte qu'ils restent tous logés et isolés à l'intérieur de celui-ci, à l'exception des adaptateurs (1, 2) qui restent situés à l'extérieur, de part et d'autre de celui-ci.

3. Dispositif compensateur électromagnétique de radiofréquences variables selon la revendication 2, dans lequel, à l'intérieur du boîtier (10), il existe deux supports (5) en matériau isolant, destinés à fixer les éléments internes de celui-ci et à empêcher que le résonateur de fréquence (7, 8, 9) ne touche les parois dudit boîtier (10), empêchant la formation d'arcs électriques pendant son fonctionnement.

4. Dispositif compensateur électromagnétique de radiofréquences variables selon l'une quelconque des revendications 2 ou 3, dans lequel le boîtier (10) est en matériau isolant étanche à l'eau et à l'air, avec une protection mécanique et anti-incendie, capable de résister à des températures allant jusqu'à 200 °C.

5. Dispositif compensateur électromagnétique de radiofréquences variables selon l'une quelconque des revendications 2 à 4, dans lequel le boîtier (10) incorpore des soupapes d'aération sous pression de l'intérieur vers l'extérieur et étanches à l'entrée de l'humidité et de l'air, chargées d'éliminer la surpression interne du boîtier, de sorte qu'il y ait toujours la même pression à l'intérieur et à l'extérieur du boîtier, ainsi que d'éliminer l'humidité à l'intérieur du boîtier qui peut être présente et d'éviter que l'humidité n'entre dans le boîtier.

6. Dispositif compensateur électromagnétique de radiofréquences variables selon la revendication 5, dans lequel le boîtier (10) possède, au moins, deux soupapes d'aération sous pression (6).

7. Dispositif compensateur électromagnétique de radiofréquences variables selon la revendication 6, dans lequel le boîtier (10) possède quatre soupapes (6).
